# EUROPEAN PATENT APPLICATION

(11) **EP 2 177 265 A1**
(43) Date of publication of application: **21.04.2010**
(21) Application number: 08777626.6
(22) Date of filing: 26.06.2008
(51) Int. Cl.: B01J 23/10, B01D 53/86, B01D 53/94, B01J 23/58, F01N 3/10

(54) **CATALYST CARRIER AND EXHAUST GAS PURIFYING CATALYST**

(30) Priority: 27.06.2007 JP 2007169274
(71) Applicant: Toyota Jidosha Kabushiki Kaisha, Toyota-shi, Aichi 471-8571 (JP)
(72) Inventor: NOBUKAWA, Takeshi, Toyota-shi Aichi 471-8571 (JP); MIYOSHI, Naoto, Toyota-shi Aichi 471-8571 (JP)
(74) Representative: Kuhnen & Wacker
(86) International application number: PCT/JP2008/061661
(87) International publication number: WO 2009/001902

(57) **Abstract**

A catalytic support 10 is made of rare-earth-element-oxide fine particles (e.g., ceria fine particles 11) comprising primary particles of a rare-earth element oxide, alumina fine particles 12 comprising primary particles of alumna, and barium-compound fine particles 13 comprising primary particles of a barium compound, rare-earth-element-oxide fine particles, alumina fine particles 12 and barium-compound fine particles 13 which are mixed with each other. A primary particle diameter of the rare-earth-element-oxide fine particles is 5 nm or less, and a primary particle diameter of the barium-compound fine particles 13 is 10 nm or less. Platinum fine particles 20 are supported, of this catalytic support 10, on the rare-earth-element-oxide fine particles virtually. It is possible to suppress the granular growth of platinum, which serves an oxidizing catalyst, and the granular growth of barium, which serves an NOₓ storage material, more securely.

## Description

### TECHNICAL FIELD

The present invention relates to a catalytic support, and an exhaust-gas converting catalyst; in particular, it relates to a catalytic support and an exhaust-gas converting catalyst that can be utilized suitably for NOₓ storage-and-reduction type catalyst for lean-burn engine.

### BACKGROUND ART

Heretofore, as a catalyst for converting automotive exhaust gas, three-way catalysts have been used, three-way catalysts which convert exhaust gases by carrying out the oxidation of carbon monoxide (CO) and hydrocarbons (HC) in the exhaust gases and the reduction of nitrogen oxides (NOₓ) in them simultaneously under the driving condition of theoretical air-fuel ratio (or being stoichiometric). As for such a three-way catalyst, the following have been known widely: those in which a porous support layer comprising γ-alumina, and the like, is formed on a heat-resistant substrate comprising cordierite, and so forth, and then a catalytic noble metal, such as platinum (Pt) or rhodium (Rh), is supported on the resulting porous support layer, for instance.

Meanwhile, from the viewpoint of global environmental protection, carbon dioxide (CO₂) in exhaust gases that are emitted from internal combustion engines for automobile, and the like, has been considered a problem recently, and the so-called "lean-burn" in which they undergo lean burning in oxygen-rich atmosphere is regarded promising as a measure for solving it. In this lean-burn, it is possible to suppress the occurrence of CO₂, namely, its combusted exhaust gas, because it is possible to reduce the consumption amount of fuel.

By the way, the performance of exhaust-gas converting catalyst depends greatly on the set-up air-fuel ratio (A/F) of engine. Specifically, on the lean side where the air-fuel ratio is great, the oxidation action becomes active and the reduction action becomes inactive because the oxygen amount in after-combustion exhaust gas becomes abundant. Accordingly, in conventional three-way catalysts which can convert CO, HC and NOₓ in exhaust gas efficiently at the theoretical air-fuel ratio (or at stoichiometry), no sufficient converting performance is exhibited with respect to the removal of NOₓ by means of reduction in lean atmosphere that turns into being oxygen rich. Consequently, an exhaust-gas converting catalyst for lean-burn engine has been desired, exhaust-gas converting catalyst which can convert NOₓ efficiently even in oxygen-rich atmosphere.

As for such an exhaust-gas converting catalyst for lean-burn engine, an NOₓ storage-and-reduction type catalyst has been put into practical use, NOₓ storage-and-reduction type catalyst in which an NOₓ storagematerial comprising an alkaline-earthmetal such as barium (Ba), and the like, and a noble metal such as Pt are supported on a porous supporter. This NOₓ storage-and-reduction type catalyst for lean-burn engine differs from the three-way catalysts in that, even when being oxygen-rich exhaust gases, it stores and then reduces NOₓ efficiently to convert them.

Moreover, as an NOₓ storage-and-reduction type catalyst for lean-burn engine, one that is completed by mixing the following has been known: one in which platinum is supported on a γ -alumina powder; one in which rhodium is supported on a γ-alumina powder with which barium oxide is combined so that it is stabilized and which does not include any rare-earth element oxide virtually; and a bulk ceria powder (See Patent Literature No. 1, for instance).

In this Patent Literature No. 1, there is a description that rhodium can reduce and then convert NOₓ efficiently even in oxygen-rich atmosphere by means of supporting rhodium onto the γ-alumina which does not include any rare-earth element oxide virtually, not by means of supporting rhodium and rare-earth element oxide onto identical alumina particles. Rhodium is one that reduces and then converts NOₓ efficiently even in oxygen-rich atmosphere, though. However, in high-temperature oxygen-rich atmosphere, rhodium has been diffused into γ-alumina by means of the mutual action between rhodium and γ-alumina; as a result, the contact between exhaust gas and rhodium is prevented, and thereby the catalytic activities of rhodium have been lowered. This lowering of the catalytic activities of rhodium becomes furthermore noticeable by means of the mutual action between rhodium and rare-earth element oxide. Hence, in an exhaust-gas converting catalyst that is set forth in this Patent Literature No. 1, the mutual action between rhodium and an alumina supporter, and the mutual action between rhodium and rare-earth element oxide are decreased by separating rhodium from rare-earth element oxide, thereby adapting the catalytic activities of rhodium so as to be maintained highly in high-temperature oxygen-rich atmosphere.
Patent Literature No. 1: Japanese Unexamined Patent Publication (KOKAI) Gazette No. 61-11,147

### DISCLOSURE OF THE INVENTION

### Assignment to be Solved by the Invention

By the way, in the conversion reaction of NOₓ by means of NOₓ storage-and-reduction type catalyst, nitrogen monoxide (NO) in exhaust gases is oxidized and is then turned into nitrogen dioxide (NO₂) by means of the oxidizing function of platinum that serves as a catalytic noble metal in lean atmosphere that turns into being oxygen rich. And, barium, for instance, which serves as an NOₓ storage material, stores the resulting NO₂ in the form of nitrate salts (Ba(NO₃)₂, for instance), and the like, and thereby NOₓ in exhaust gases are converted. Accordingly, in the conversion reaction of NOₓ by means of NOₓ storage-and-reduction type catalyst, platinum, which serves as an oxidizing catalyst, takes on an important role.

However, platinum is associated with such a problem that it undergoes granular growth (or sintering) to degrade thermally when being exposed to high temperatures in oxygen-rich atmosphere. When platinum undergoes granular growth, the oxidizing performance of platinum has lowered because the catalytically active sites of platinum decrease, and thereby the reactivity from NO to NO₂, namely, the previous stage to the above-described NOₓ storage, has lowered. Therefore, it is needed to suppress the granular growth of platinum in order to suppress the degradation of NOₓ storage-and-reduction type catalyst.

Moreover, barium, which serves as an NOₓ storage material, is associated with such a problem as well that it undergoes granular growth to degrade thermally when being exposed to high temperatures.

In reality, however, the above-described conventional NOₓ storage-and-reduction type catalyst is not necessarily one that can suppress the granular growth of platinum and barium sufficiently.

The present invention is one which has been done in view of the aforementioned circumstances, and it is a technical assignment to be solved to suppress the granular growth of platinum, which serves an oxidizing catalyst, and the granular growth of barium, which serves an NOₓ storage material, more securely.

### Means for Solving the Assignment

A catalytic support according to the present invention, which solves the aforementioned assignment, is **characterized in that**:
it is made of rare-earth-element-oxide fine particles comprising primary particles of a rare-earth element oxide, alumina fine particles comprising primary particles of alumna, and barium-compound fine particles comprising primary particles of a barium compound, rare-earth-element-oxide fine particles, alumina fine particles and barium-compound fine particles which are mixed with each other;
a primary particle diameters of said rare-earth-element-oxide fine particles is 5 nm or less; and
a primary particle diameter of said barium-compound fine particles is 10 nm or less.

Here, the "barium compound" is one which includes at least one of barium carbonate and barium oxide; but it is allowable that it can include barium nitrate, or the like, in addition to barium carbonate and barium oxide.

Alumina and part of rare-earth element oxide (ceria, for instance) do not make any solid solution virtually. Consequently, even after thermal endurance testing, the alumina fine particles, and the rare-earth-element-oxide fine particles become reaction barriers to each other and then suppress the respective granular growths (or sintering).

Since rare-earth element oxides exhibit strong chemical affinity to platinum, they effectively suppress the granular growth of platinum that is supported on the rare-earth-element-oxide fine particles.

In particular, in the catalytic support according to the present invention, the rare-earth-element-oxide fine particles comprising the primary particles, the alumina fine particles comprising the primary particles, and the barium-compound fine particles comprising the primary particles are mixed with each other; and a primary particle diameter of the rare-earth-metal-oxide fine particles is set to 5 nm or less, and a primary particle diameter of the barium-compound fine particles is set to 10 nm or less. By means of the setting that the rare-earth-element-oxide fine particles comprising the primary particles and the barium-compound fine particles comprising the primary particles are mixed in the catalytic support in a highly dispersed state at such an extremely small fine-particulate level as 10 nm or less like this, not only it is possible to keep the barium-compound fine particles and the rare-earth-element-oxide fine particles in this catalytic support extremely effectively from undergoing granular growth after thermal endurance testing, but also it is possible to keep the platinum, which is supported on this catalytic support, extremely effectively from undergoing granular growth after thermal endurance testing, as shown in later-described examples.

Here, although barium can function as an NOₓ storage material, the barium-compound fine particles in the catalytic support according to the present invention is also effective with respect to the granular-growth suppression of platinum, as shown in later-described examples. This effect on the granular-growth suppression of platinum that results from the barium-compound fine particles is believed to result from the diffusion suppression of platinum that results from the basicity improvement of alumina that constitutes the catalytic support. Moreover, considering that the barium-compound fine particles produce the effect of suppressing the granular growth of the rare-earth-element-oxide fine particles, the barium-compound fine particles suppress the granular growth of the platinum fine particles, which are supported on the rare-earth-element-oxide fine particles, indirectly by suppressing the granular growth of the rare-earth-element-oxide fine particles.

Moreover, the rare-earth-element-oxide fine particles not only produce an effect with respect to the granular-growth suppression of the platinum particles and alumina fine particles, but also produce an effect with respect to the granular-growth suppression of the barium-compound fine particles. This granular-growth suppression of the barium-compound fine particles that results from the rare-earth-element-oxide fine particles is believed to result from the interaction between the rare-earth element oxide and the barium compound.

In the catalytic support according to the present invention, it is preferable that the primary particle diameter of said barium-compound fine particles can be 5 nm or less, and it is more preferable that it can be less than 2 nm. The smaller the primary particle diameter of the barium-compound fine particle is, the more effectively it is possible to keep platinum from undergoing granular growth after thermal endurance testing, as shown in later-described examples. However, even when the primary-particle diameter of the barium-compound fine particles is about 10 nm, it is possible to keep platinum from undergoing granular growth after thermal endurance testing, as shown in later-described examples.

In the catalytic support according to the present invention, it is preferable that said rare-earth element oxide can be ceria. Since ceria exhibits, among rare-earth element oxides, especially strong chemical affinity to platinum, it is possible to suppress the granular growth of platinum more effectively. Moreover, since ceria does not make, among rare-earth element oxides, any solid solution especially with barium compounds, it is possible to suppress the granular growth of the barium-compound fine particles more effectively.

In the catalytic support according to the present invention, it is preferable that the primary particle diameter of said rare-earth-element-oxide fine particles can be 3 nm or less. The smaller the primary particle diameter of the rare-earth-element-oxide fine particle is, the more effectively it is possible to keep platinum from undergoing granular growth after thermal endurance testing, as shown in later-described examples. However, even when the primary particle diameter of the rare-earth-element-oxide fine particles is about 5 nm, it is possible to keep platinum from undergoing granular growth after thermal endurance testing, as shown in later-described examples.

An exhaust-gas converting catalyst according to the present invention which solves the aforementioned assignment is one which is equipped with: the catalytic support as set forth in either one of claims 1-5; and platinum fine particles being supported on the catalytic support.

In the exhaust-gas converting catalyst according to the present invention, it is preferable that said platinum fine particles can be supported, of said catalytic support, on said rare-earth-element-oxide fine particles virtually. By the setting in which platinum fine particles are supported on the rare-earth-element-oxide fine particles, it is possible to inhibit the granular growth of platinum more effectively.

Here, the clause, "the platinum fine particles can be supported, of the catalytic support, on the rare-earth-element-oxide fine particles virtually" means that a major part of the platinum fine particles on the catalytic support are supported on the rare-earth-element-oxide fine particles by means of having, of the constituent elements of the catalytic support, the rare-earth element oxide bond chemically with platinum preferentially. That is, its purport is not for limiting that all of the platinum fine particles on the catalytic support are supported on the rare-earth-element-oxide fine particles, but for claiming that it is allowable as well that a part of the platinum fine particles on the catalytic support can be supported on the alumina fine particles and/or on the barium-compound fine particles.

In the exhaust-gas converting catalyst according to the present invention, it is preferable that 70% by mass or more of the platinum fine particles can be supported on said rare-earth-element-oxide fine particles; and it is more preferable that 80% by mass or more of the platinum fine particles can be supported on said rare-earth-element-oxide fine particles; when the entirety of said platinum fine particles is taken as 100% by mass.

### BRIEF DESCRIPTION OF THE DRAWINGS

Fig. 1 is a conceptual diagram of an exhaust-gas converting catalyst that is directed to Example No. 1;
Fig. 2 is a conceptual diagram of an exhaust-gas converting catalyst according to Comparative Example No. 1;
Fig. 3 is a conceptual diagram of an exhaust-gas converting catalyst according to Comparative Example No. 2;
Fig. 4 is a diagram for illustrating platinum particle diameters in exhaust-gas converting catalysts according to Example No. 1, Example No. 2, Comparative Example No.1 and Comparative Example No. 2 after thermal endurance testing;
Fig. 5 is a diagram for illustrating results of X-ray diffraction analysis (or XRD) in exhaust-gas converting catalysts according to Example No. 1, Example No. 2, Comparative Example No. 1 and Comparative Example No. 2 after thermal endurance testing; and
Fig. 6 is a diagram for illustrating an effect in which the granular growth of platinum is suppressed by means of adding an oxide of lanthanum that serves as a rare-earth element oxide.

### Explanation on Reference Numerals

- 10: Catalytic Support;
- 11: Ceria Fine Particles (or Rare-earth-element-oxide Fine Particles);
- 12: Alumina Fine Particles;
- 13: Barium-compound Fine Particles; and
- 20: Platinum Fine Particles

### Best Mode for Carrying Out the Invention

Hereinafter, embodying modes according to the present invention will be explained.

A catalytic support that is directed to one of the present embodying modes is made of rare-earth-element-oxide fine particles comprising primary particles of a rare-earth element oxide, alumina fine particles comprising primary particles of alumina and barium-compound fine particles comprising primary particles of a barium compound, rare-earth-element-oxide fine particles, alumina fine particles and barium-compound fine particles which are mixed with each other. Moreover, an exhaust-gas converting catalyst that is directed to one of the present embodying modes comprises this catalytic support, and platinum fine particles being supported on this catalytic support.

Although it is possible to use ceria suitably as for the rare-earth element oxide, it is allowable to use an oxide of La, Pr or Nd, and the like, as for a rare-earth element oxide other than ceria; alternatively it is also allowable to use rare-earth-element-oxide solid solutions of ceria-zirconia, and so forth.

A primary particle diameter of the rare-earth-element-oxide fine particles is set to 5 nm or less (not including 0 nm). When this primary particle diameter of the rare-earth-element-oxide fine particles becomes greater than 5 nm, it is not possible to suppress the granular growth of platinum effectively. From the viewpoint of suppressing the granular growth of platinum more effectively, it is preferable to set the primary particle diameter of the rare-earth-element-oxide fine particles to 3 nm or less. When the primary particle diameter of the rare-earth-element-oxide fine particles being 3 nm or less, it is possible to suppress the granular growth of platinum more effectively, because those rare-earth-element-oxide fine particles are mixed into the alumina fine particles and barium-compound fine particles in a very highly dispersed state. Of course, even if the primary particle diameter of the rare-earth-element-oxide fine particles is greater than 3 nm, when being 5 nm or less, it is possible to suppress the granular growth of platinum sufficiently. Note that the lower limit in the primary particle diameter of the rare-earth-element-oxide fine particles, which can be present as an independent rare-earth-element-oxide fine particle, is 1 nm approximately.

A compounding amount of the rare-earth-element-oxide fine particles can preferably be set to 5-30% by mass; more preferably to 15-25% by mass; when the entirety of the catalytic support is taken as 100% by mass. When the compounding amount of the rare-earth-element-oxide fine particles is too much, the catalytic activities as an exhaust-gas converting catalyst for lean burning lower; when being too less, the effect of suppressing the granular growth of the barium-compound fine particles gets smaller.

Although a primary particle diameter of the alumina fine particles is not limited in particular, it can be set to 10 nm or less approximately (not including 0 nm). When the primary particle diameter of the alumina fine particles is too great, it is not possible to suppress the granular growth of rare-earth-element-oxide fine particles; as a result it is not possible to suppress the granular growth of platinum on the rare-earth-element-oxide fine particles effectively. On the other hand, when the primary particle diameter of the alumina fine particles is too small, the resulting thermal stability lowers. It is preferable to set the lower limit in the primary particle diameter of the alumina fine particles to 5 nm approximately.

A compounding amount of the alumina fine particles can preferably be set to 40-90% by mass; more preferably to 55-85% by mass; when the entirety of the catalytic support is taken as 100% by mass. When the compounding amount of the alumina fine particles is too much, the granular growth of platinum is not suppressed effectively; when being too less, the granular growth of the rare-earth-element-oxide fine particles is not suppressed effectively.

A primary particle diameter of the barium-compound fine particles is set to 10 nm or less (not including 0 nm). When this primary particle diameter of the barium-compound fine particles becomes greater than 10 nm, the barium-compound fine particles are not dispersed highly into the rare-earth-metal-oxide fine particles and alumina fine particles sufficiently. Accordingly, the barium-compound fine particles are maldistributed and are then agglomerated by means of degradation; as a result, the rare-earth-element-oxide fine particles and barium-compound fine particles become likely to undergo granular growth. From the viewpoint of suppressing the granular growth of the rare-earth-element-oxide fine particles themselves and barium-compound fine particles themselves, it is preferable to set the primary particle diameter of the barium-compound fine particles to 5 nm or less, more preferably to less than 2 nm. When the primary particle diameter of the barium-compound fine particles being less than 2 nm, those barium-compound fine particles are dispersed highly into the alumina fine particles and rare-earth-element-oxide fine particles, and it is possible to suppress the granular growth of the rare-earth-element-oxide fine particles effectively. Note that the lower limit in the primary particle diameter of the barium-compound fine particles, which can be present as an independent barium-compound fine particle, is 1 nm approximately.

A compounding amount of the barium-compound fine particles can preferably set to 3-30% by mass by conversion into barium oxide; more preferably to 5-20% by mass by conversion into barium oxide; when the entirety of the catalytic support is taken as 100% by mass. When the compounding amount of the barium compound fine particles is too much, it becomes difficult to turn the barium compound into fine particles; when being too less, the resulting catalytic activities as an exhaust-gas converting catalyst lower.

Asdescribedabove, this bariumcompound is one which includes at least one of barium carbonate and barium oxide. In the barium compound, it is even allowable that barium nitrate, or the like, can be included in addition to barium carbonate and barium oxide.

Moreover, a specific surface area of the catalytic support can preferably be 150 m²/g or more, more preferably 170 m²/g or more. When the specific surface area of the catalytic support is too small, the resulting catalytic activities as an exhaust-gas converting catalyst lower.

The platinum fine particles that are supported on the catalytic support are supported, of the catalytic support, on the rare-earth-element-oxide fine particlesvirtually. That is, a maj or part of the platinum fine particles, which are supported on the catalytic support, are supported on the rare-earth-element-oxide fine particles by means of chemical affinity. Note that, when the entirety of the platinum fine particles that are supported on the catalytic support is taken as 100% by mass, it is preferable that 70% by mass or more of the platinum fine particles can be supported on the rare-earth-element-oxide fine particles; and it is more preferable that 80% by mass or more of the platinum fine particles can be supported on the rare-earth-element-oxide fine particles.

Although a supporting amount of the platinum fine particles is not limited in particular, it is possible to set it to 0.2-2.0% by mass approximately when the entirety of the exhaust-gas converting catalyst is taken as 100% by mass.

Moreover, although particle diameters of the platinum fine particles are not limited in particular, either, it is possible to set them to 1-3 nm approximately.

Note that, in the catalytic support and exhaust-gas converting catalyst that are directed to the present embodying modes, it is even allowable to compound the other components, if needed. For example, it is allowable to compound acidic metallic oxide, such as titania, in the catalytic support; moreover, it is also allowable to support an alkali metal, such as lithium, potassium or sodium, on this catalytic support.

Although the catalytic support and exhaust-gas converting catalyst that are directed to the present embodying modes are not limited in particular regarding their production methods, it is possible to produce them in the following manner, for instance.

First of all, an alumina sol is made ready, and then this alumina sol is agglomerated to obtain an agglomerate. For the alumina sol, it is even allowable to use commercially available products; alternatively, it is also allowable to use those which are obtained by hydrolyzing and condensing metallic alkoxides, metallic acetylacetonates, metallic acetates, metallic nitrates, and the like. Although it is possible to carry out the agglomeration of alumina sol by means of any methods, it is possible to carry it out by means of making a solution acidic or alkaline, for instance.

Meanwhile, a nitrate of rare-earth element is made ready. In addition to this nitrate, it is even allowable to use commercially available ceria sols; alternatively, it is also allowable to use those which are obtained by hydrolyzing and condensing metallic alkoxides, metallic acetylacetonates, metallic acetates, and the like. Moreover, as an acetate or nitrate of barium, and so forth, barium acetate is made ready, for instance.

And, with respect to the resulting alumina-sol agglomerates, a ceria sol, and barium acetate are added to coprecipitate them, thereby obtaining agglomerated precipitates. It is possible to carry out this coprecipitation of the ceria sol and barium acetate with respect to the alumina-sol agglomerates by means of making the resultant solution alkaline.

The thus obtained agglomerated precipitates are dried, and are then calcined by heating them at a predetermined temperature, thereby completing the catalytic support according to one of the present embodying modes. Note that it is possible to carry out the drying on this occasion at a temperature of 100-140 °C approximately, and that it is possible to carry out the calcination at a temperature of 450-550 °C approximately.

In the thus obtained catalytic support, the respective primary particles of the rare-earth-element-oxide fine particles, alumina fine particles and barium-compound fine particles are mixed with each other. Moreover, it is possible to adjust the primary particle diameters of the respective primary particles of the rare-earth-element-oxide fine particles, alumina fine particles and barium-compound fine particles by means of adjusting stirring intensity or solution temperatures.

And, this catalytic support is impregnated with a dinitro diamine platinum nitrate aqueous solution, and then the platinum fine particles are supported on the catalytic support by drying and calcining this, thereby completing the exhaust-gas converting catalyst according to one of the present embodying modes. Note that it is possible to carry out the drying at a temperature of 100-140 °C approximately, and that it is possible to carry out the calcination at a temperature of 350-550 °C approximately.

In the thus obtained exhaust-gas converting catalyst, the platinum fine particles that are supported onto the catalytic support are supported, of the catalytic support, on the rare-earth-element-oxide fine particles virtually. That is, major part of the platinum fine particles on the catalytic support (e. g. , 70% by mass or more of the entire platinum fine particles, more preferably 80% by mass or more thereof) are supported on the rare-earth-element-oxide fine particles by means of the fact that the platinum fine particles bond chemically with the rare-earth-element-oxide fine particles preferentially by means of chemical affinity.

Here, it is possible to carry out the confirmation that the platinum fine particles are supported on the rare-earth-element-oxide fine particles by observing the obtained exhaust-gas converting catalyst by means of a transmission electron microscope after subjecting it to thermal endurance testing in which it is heated in air at a predetermined temperature (750 °C, for instance) for a predetermined time (5 hours, for instance).

Moreover, it is possible to adjust the particle diameters of the platinum fine particles to be supported on the catalytic support by means of improving the particle diameters and dispersibility of the rare-earth-element-oxide fine particles.

In the catalytic support that is directed to one of the present embodying modes, the rare-earth-element-oxide fine particles (e.g., ceria fine particles) comprising primary particles whose primary particle diameter is 5 nm or less, and the barium-compound fine particles comprising primary particles whose primary particle diameter is 10 nm or less are mixed in a highly dispersed state within the catalytic support at an extremely small fine-particulate level. Besides, in the exhaust-gas converting catalyst that is directed to one of the present embodying modes, a major part of the platinum fine particles are supported on the rare-earth-element-oxide fine particles (e.g., ceria fine particles). Consequently, it is possible for the exhaust-gas converting catalyst that is directed to one of the present embodying modes to keep not only the barium-compound fine particles and the rare-earth-element-oxide fine particles (e.g., ceria fine particles) in the catalytic support but also the platinum fine particles, which are to be supported on that catalytic support, effectively from undergoing granular growth even after being subjected to thermal endurance testing in which it is heat treated in air at 750 °C for 5 hours, for instance.

Therefore, it is possible to utilize the catalytic support and exhaust-gas converting catalyst that are directed to the present embodying modes suitably for NOₓ storage-and-reduction type catalysts for lean-burn engine.

### EXAMPLES

Hereinafter, examples according to the present invention will be explained in detail while referring to the drawings.

### (Example No. 1)

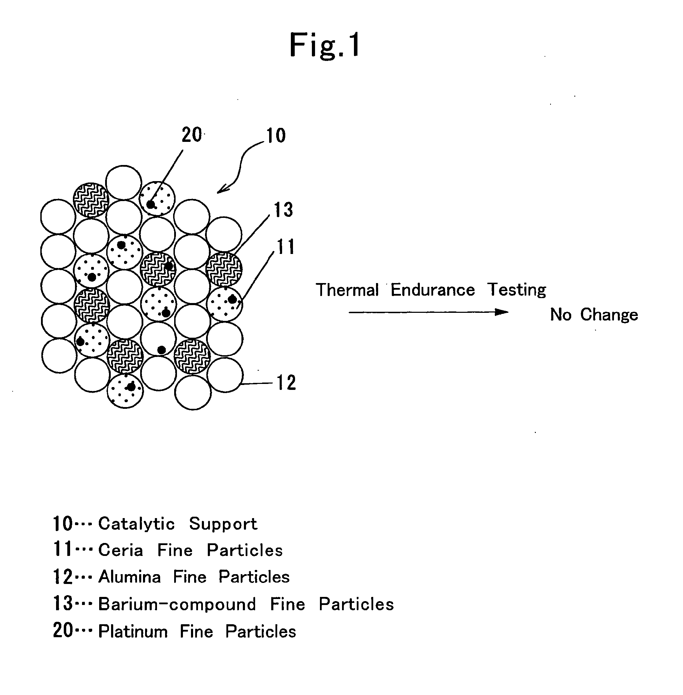

Fig. 1 is a conceptual diagram of a catalytic support and exhaust-gas converting catalyst according to present Example No. 1. A catalytic support 10 that is directed to present Example No. 1 is made of ceria fine particles 11 comprising primary particles of ceria that serves as a rare-earth element oxide, alumina fine particles 12 comprising primary particles of alumina, and barium-compound fine particles 13 comprising primary particles of a barium compound, ceria fine particles 11, alumina fine particles 12 and barium-compound fine particles 13 which are mixed with each other. Moreover, an exhaust-gas converting catalyst that is directed to present Example No. 1 comprises this catalytic support 10, and platinum fine particles 20 that are supported on this catalytic support 10.

The platinum fine particles 20 that are supported on the catalytic support 10 are supported, of the catalytic support 10, on the rare-earth-element-oxide fine particles 11 virtually. That is, a major portion (e.g. , 80% by mass or more of the entire platinum fine particles) of the platinum fine particles 20 that are supported on the catalytic support 10 are supported on the ceria fine particles 11 by means of chemical affinity.

The compounding amounts of the respective components in the catalytic support 10 and exhaust-gas converting catalyst that are directed to present Example No. 1 are as follows. Specifically, the compounding amount of the ceria fine particles 11 in the catalytic support 10 is set at 20% by mass when the entirety of the catalytic support 10 is taken as 100% by mass. The compounding amount of the alumina fine particles 12 is set at 70.5% by mass when the entirety of the catalytic support 10 is taken as 100% by mass. The compounding amount of the barium-compound fine particles 13 is set at 9.5% by mass by conversion into barium oxide when the entirety of the catalytic support 10 is taken as 100% by mass. The supporting amount of the platinum fine particles 20 is set at 1% by mass when the entirety of the exhaust-gas converting catalyst is taken as 100% by mass.

Moreover, the sizes, and the like, of the respective components in the catalytic support 10 and exhaust-gas converting catalyst that are directed to present Example No. 1 are as follows. Specifically, a specific surface area of the catalytic support 10 is 235.1 m²/g. An average primary particle diameter of the ceria fine particles 11 is 2.1 nm; an average particle diameter of the alumina fine particles 12 is 10 nm; an average primary particle diameter of the barium-compound fine particles 13 is less than 2.0 nm; and an average particle diameter of the platinum fine particles 20 is 1.6 nm. Note that the primary particle diameters of the ceria fine particles 11 and barium-compound fine particles 13 are those which were found by means of X-ray diffraction analysis (XRD). Here, the measurement limit of this X-ray diffraction analysis is 2.0 nm, and no detection was made by means of this X-ray diffraction analysis regarding the primary particle diameters of the barium-compound fine particles 13. Consequently, the primary particle diameters of the barium-compound fine particles 13 were judged to be less than 2.0 nm. Moreover, the particle diameters of the platinum fine particles 20 were those which were measured by means of a CO pulse adsorption method at 0 °C, and the primary particle diameters of the alumina fine particles 12 were those which were found with a transmission electron microscope.

Note that the barium compound that constitutes the barium-compound fine particles 13 in present Example No. 1 is barium carbonate.

The catalytic support 10 and exhaust-gas converting catalyst that are directed to present Example No.1 were produced in the following manner.

First of all, 375-gram alumina nitrate· nanohydrate was dissolved into 2.5-liter ion-exchanged water, and was stirred for over a period of 2 hours. The resulting solution was dropped into a large volume of ammonia water, and thereby exhibited a pH of 9. Thereafter, a dispersion liquid of alumina precursor sol was obtained by means of adding a nitric acid solution to it and then stirring it for over a period of 2 hours while maintaining a pH of 5.

Meanwhile, 74.4-gram cerium nitrate· hexahydrate was dissolved into 1-liter ion-exchanged water, and was stirred for over a period of 2 hours, thereby adapting it into a cerium nitrate aqueous solution. Moreover, 20-gram barium acetate was dissolved into 0.5-liter ion-exchanged water, and was stirred for over a period of 2 hours, thereby adapting it into a barium acetate aqueous solution.

And, with respect to 1,000-gram dispersion liquid of the alumina precursor sol, 400-gram cerium nitrate aqueous solution, and 200-gram barium acetate aqueous solution were added to make them undergo co-precipitation, thereby obtaining agglomerated precipitates.

After washing the thus obtained agglomerated precipitates with ammonia water, and then after drying them at a temperature of 120 °C for over a period of 12 hours, they were calcined at a temperature of 500 °C for over a period of 2 hours, thereby completing a catalytic support 10 that is directed to present Example No. 1.

Thereafter, 120 g of the catalytic support 10 was immersed into 1-gram dinitro diamine platinum nitrate aqueous solution by conversion into platinum, and was stirred for over a period of 2 hours. And, after drying the resulting mixture solution at a temperature of 120 °C for over a period of 2 hours or more, it was calcined at a temperature of 400 °C for over a period of 1 hour. By means of this, the platinum fine particles 20 were supported onto the catalytic support 10, thereby completing an exhaust-gas converting catalyst that is directed to present Example No. 1.

### (Example No. 2)

Except that a ceria sol is used as one of the reagents instead of the cerium nitrate, present Example No. 2 is the same as said Example No. 1.

Specifically, a catalytic support 10 that is directed to present Example No. 2 is made of ceria fine particles 11 comprising primary particles of ceria that serves as a rare-earth element oxide, alumina fine particles 12 comprising primary particles of alumina, and barium-compound fine particles 13 comprising primary particles of a barium compound, ceria fine particles 11, alumina fine particles 12 and barium-compound fine particles 13 which are mixed with each other. Moreover, an exhaust-gas converting catalyst that is directed to present Example No. 2 comprises this catalytic support 10, and platinum fine particles 20 that are supported on this catalytic support 10. That is, the catalytic support 10 and exhaust-gas converting catalyst that are directed to present Example No. 2 can be shown with the same conceptual diagram as that of the catalytic support and exhaust-gas converting catalyst according to Example No. 1 that is illustrated in Fig. 1.

The platinum fine particles 20 that are supported on the catalytic support 10 are supported, of the catalytic support 10, on the rare-earth-element-oxide fine particles 11 virtually. That is, a major portion (e.g., 80% by mass or more of the entire platinum fine particles) of the platinum fine particles 20 that are supported on the catalytic support 10 are supported on the ceria fine particles 11 by means of chemical affinity.

The compounding amounts of the respective components in the catalytic support 10 and exhaust-gas converting catalyst that are directed to present Example No. 2 are as follows. Specifically, the compounding amount of the ceria fine particles 11 in the catalytic support 10 is set at 20% by mass when the entirety of the catalytic support 10 is taken as 100% by mass. The compounding amount of the alumina fine particles 12 is set at 69% by mass when the entirety of the catalytic support 10 is taken as 100% by mass. The compounding amount of the barium-compound fine particles 13 is set at 11% by mass by conversion into barium oxide when the entirety of the catalytic support 10 is taken as 100% by mass. The supporting amount of the platinum fine particles 20 is set at 1% by mass when the entirety of the exhaust-gas converting catalyst is taken as 100% by mass.

Moreover, the sizes, and the like, of the respective components in the catalytic support 10 and exhaust-gas converting catalyst that are directed to present Example No. 2 are as follows. Specifically, a specific surface area of the catalytic support 10 is 219.5 m²/g. An average primary particle diameter of the ceria fine particles 11 is 4.7 nm; an average particle diameter of the alumina fine particles 12 is 10 nm; an average primary particle diameter of the barium-compound fine particles 13 is 9.5 nm; and an average particle diameter of the platinum fine particles 20 is 1.7 nm. Note that the primary particle diameters of the ceria fine particles 11 and barium-compound fine particles 13 are those which were found by means of X-ray diffraction analysis (XRD). Moreover, the particle diameters of the platinum fine particles 20 were those which were measured by means of a CO pulse adsorption method at 0 °C, and the primary particle diameters of the alumina fine particles 12 were those which were found with a transmission electron microscope.

Note that the barium compound that constitutes the barium-compound fine particles 13 in present Example No. 2 is barium carbonate.

The catalytic support 10 and exhaust-gas converting catalyst that are directed to present Example No. 2 were produced in the following manner.

First of all, 375-gram alumina nitrate· nanohydrate was dissolved into 2.5-liter ion-exchanged water, and was stirred for over a period of 2 hours. The resulting solution was dropped into a large volume of ammonia water, and thereby exhibited a pH of 9. Thereafter, a dispersion liquid of alumina precursor sol was obtained by means of adding a nitric acid solution to it and then stirring it for over a period of 2 hours while maintaining a pH of 5.

Meanwhile, a commercially available ceria sol was made ready. Moreover, 20-gram barium acetate was dissolved into 0.5-liter ion-exchanged water, and was stirred for over a period of 2 hours, thereby adapting it into a barium acetate aqueous solution.

And, with respect to 1, 000-g dispersion liquid of the alumina precursor sol, the ceria sol, and a barium acetate aqueous solution were added in a predetermined amount, respectively, to make them undergo co-precipitation, thereby obtaining agglomerated precipitates.

After washing the thus obtained agglomerated precipitates with ammonia water, and then after drying them at a temperature of 120 °C for over a period of 12 hours, they were calcined at a temperature of 500 °C for over a period of 2 hours, thereby completing a catalytic support 10 that is directed to present Example No. 2.

Thereafter, 120 g of the catalytic support 10 was immersed into 1-gram dinitro diamine platinum nitrate aqueous solution by conversion into platinum, and was stirred for over a period of 2 hours. And, after drying the resulting mixture solution at a temperature of 120 °C for over a period of 2 hours or more, it was calcined at a temperature of 400 °C for over a period of 1 hour. By means of this, the platinum fine particles 20 were supported onto the catalytic support 10, thereby completing an exhaust-gas converting catalyst that is directed to present Example No. 2.

### (Comparative Example No. 1)

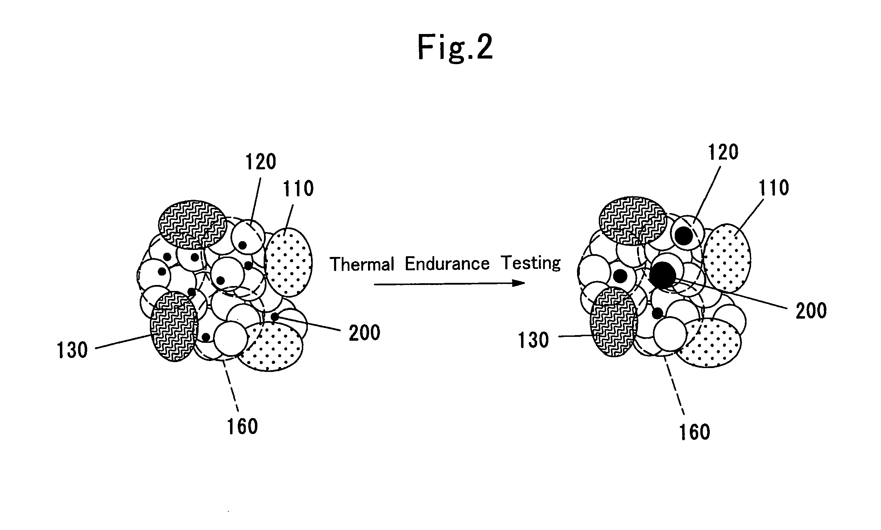

Fig. 2 is a conceptual diagram of an exhaust-gas converting catalyst according to Comparative Example No. 1. The exhaust-gas converting catalyst according to Comparative Example No. 1 comprises alumina particles 120 that serve as a catalytic support, platinum fine particles 200 that are supported on these alumina particles 120, ceria particles 110 that are supported on them, and barium-compound particles 130 that are supported on them. Moreover, the alumina particles 120 comprise primary particles of alumina, the ceria particles 110 comprise primary particles of ceria, and the barium-compound particles 130 comprise primary particles of a barium compound. Moreover, the alumina particles 120 that comprise primary particles of alumina are agglomerated in an amount of plural pieces to form alumina-particle aggregates 160.

This exhaust-gas converting catalyst according to Comparative Example No. 1 was produced in the following manner.

First of all, the alumina particles 120, namely, a commercially available alumina powder, were made ready, and the same platinum supporting method as that has been explained in said Example No. 1 was performed with respect to these alumina particles 120, thereby obtaining a platinum-supported catalyst that comprised the alumina particles 120 and the platinum fine particles 200 being supported on these alumina particles 120.

Next, 100 g of the platinum-supported catalyst was immersed into a mixture solution in which 17.8-gram barium acetate and 27. 6-gram cerium acetate were dissolved into 0.5-liter ion-exchanged water, and was stirred for over a period of 2 hours. And, after drying the resulting mixture solution at a temperature of 120 °C for over a period of 2 hours or more, it was calcined at a temperature of 400 °C for over a period of 1 hour. By means of this, the ceria particles 110, and the barium-compound particles 130 were supported onto said platinum-supported catalyst, thereby completing the exhaust-gas converting catalyst that is directed to Comparative Example No. 1.

Here, compounding amounts of the respective components in the exhaust-gas converting catalyst according to Comparative Example No. 1 are equivalent to the compounding amounts of the respective components in the exhaust-gas converting catalyst that is directed to said Example No. 1.

Moreover, the sizes, and the like, of the respective components in the exhaust-gas converting catalyst according to Comparative Example No. 1 are as follows. Specifically, a specific surface area of the exhaust-gas converting catalyst according to Comparative Example No. 1 is 155.6 m²/g. An average primary particle diameter of the ceria particles 110 is 5.4 nm; an average primary particle diameter of the alumina particles 120 is about 30 nm; an average primary particle diameter of the barium-compound particles 130 is 22.2 nm; and an average particle diameter of the platinum fine particles 200 is 3.0 nm. Note that the primary particle diameters of the ceria particles 110 and barium-compound particles 130 are those which were found by means of X-ray diffraction analysis (XRD). Moreover, the particle diameters of the platinum fine particles 200 were those which were measured by means of a CO pulse adsorption method at 0 °C, and the average primary particle diameter of the alumina particles 120 was one which was found by means of a transmission electron microscope.

Note that the average particle diameter of the platinum fine particles 200 being greater than those in Example Nos. 1 and 2 is one which results from the influence of the heat treatments at the time of the catalyst production.

### (Comparative Example No. 2)

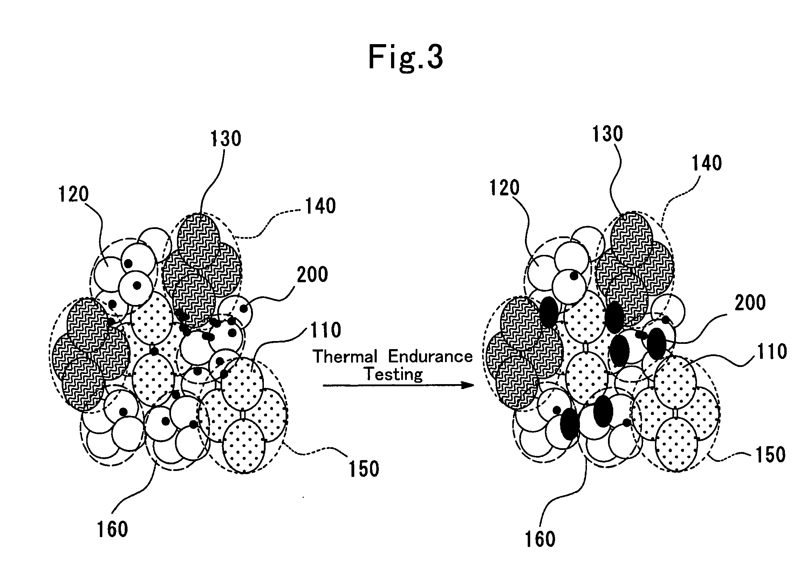

Fig. 3 is a conceptual diagram of an exhaust-gas converting catalyst according to Comparative Example No. 2. The exhaust-gas converting catalyst according to Comparative Example No. 2 comprises alumina particles 120 that serve as a catalytic support, platinum fine particles 200 that are supported on these alumina particles 120, ceria particles 110 that are supported on them, and barium-compound particles 130 that are supported on them. Moreover, the alumina particles 120 comprise primary particles of alumina, the ceria particles 110 comprise primary particles of ceria, and the barium-compound particles 130 comprise primary particles of a barium compound. Note however that the ceria particles 110 that comprise primary particles of ceria are agglomerated in an amount of plural pieces to form ceria-particle aggregates 150. Moreover, the barium-compound particles 130 that comprise primary particles of a barium compound are agglomerated in an amount of plural pieces to form barium-compound-particle aggregates 140. Moreover, the alumina particles 120 that comprise primary particles of alumina are agglomerated in an amount of plural pieces to form alumina-particle aggregates 160.

This exhaust-gas converting catalyst according to Comparative Example No. 2 was produced in the following manner.

First of all, the alumina particles 120 that was the same as those of Comparative Example No. 1, and the ceria particles 110, namely, a commercially available ceria powder, were made ready, and the same platinum supporting method as that has been explained in said Example No. 1 was performed with respect to the resulting mixture powder, thereby obtaining a platinum-supported catalyst that comprised the mixture powder comprising the alumina particles 120 and ceria particles 110, and the platinum fine particles 200 being supported, of this mixture powder, on the alumina particles 120 virtually.

Next, 100 g of the platinum-supported catalyst was immersed into an aqueous solution in which 11.2-gram barium acetate was dissolved into 0.5-liter ion-exchanged water, and was stirred for over a period of 2 hours. And, after drying the resulting mixture solution at a temperature of 120 °C for over a period of 2 hours or more, it was calcined at a temperature of 400 °C for over a period of 1 hour. By means of this, the barium-compound particles 130 were supported onto said platinum-supported catalyst, thereby completing the exhaust-gas converting catalyst that is directed to Comparative Example No. 2.

Here, compounding amounts of the respective components in the exhaust-gas converting catalyst according to Comparative Example No. 2 are equivalent to the compounding amounts of the respective components in the exhaust-gas converting catalyst that is directed to said Example No. 1.

Moreover, the sizes, and the like, of the respective components in the catalytic support according to Comparative Example No. 2 are as follows. Specifically, a specific surface area of the exhaust-gas converting catalyst according to Comparative Example No. 2 is 140.8 m²/g. An average primary particle diameter of the ceria particles 110 is 9.4 nm; an average primary particle diameter of the alumina particles 120 is about 30 nm; an average primary particle diameter of the barium-compound particles 130 is 22.0 nm; and an average particle diameter of the platinum fine particles 200 is 4.2 nm. Note that the primary particle diameters of the ceria particles 110 and barium-compound particles 130 are those which were found by means of X-ray diffraction analysis (XRD). Moreover, the particle diameters of the platinum fine particles 200 were those which were measured by means of a CO pulse adsorption method at 0 °C, and the average primary particle diameter of the alumina particles 120 was one which was found by means of a transmission electron microscope.

Note that the average particle diameter of the platinum fine particles 200 being greater than those in Example Nos. 1 and 2 is one which results from the influence of the heat treatments at the time of the catalyst production.

### (Evaluation Test for Thermal Endurance)

In order to carry out an evaluation test for thermal endurance, the exhaust-gas converting catalysts according to Example No. 1, Example No. 2, Comparative Example No. 1 and Comparative Example No. 2 were molded as a 1 mm-by-1 mm squared pellet shape to adapt them into test specimens. And, the respective test specimens were heat treated at 750 °C in air for over a period of 5 hours, thereby degrading platinum.

As a result, in the exhaust-gas converting catalyst that is directed to Example No. 1, the barium-compound fine particles 13, the ceria fine particles 11, and the platinum fine particles 20 had hardly undergone granular growth even after the thermal endurance testing. As major reasons for resulting in such consequences, the following are named: the ceria fine particles 11 comprising primary particles whose primary particle diameter is 5 nm or less (e.g., 2.1 nm), and the barium-compound fine particles 13 whose primary particle diameter is 10 nm or less (e.g., less than 2.0 nm) are mixed in a highly dispersed manner on the catalytic support 10 at an extremely small fine-particulate level; and a major part of the platinum fine particles 20 are supported on the ceria fine particles 11.

Specifically, because of the setting in which the platinum fine particles 20 were supported on the very fine ceria fine particles 11 whose primary particle diameter was 2.1 nm that was 5 nm or less, it is believed that these ceria fine particles 11 suppressed the granular growth of the platinum fine particles 20 extremely effectively. Moreover, because of the setting in which the ceria fine particles 11 whose primary particle diameter was 2.1 nm that was 5 nm or less, and the barium-compound fine particles 13 whose primary particle diameter was less than 2.0 nm that was 10 nm or less were mixed in a highly dispersed manner, it is believed that the ceria fine particles 11 suppressed the granular growth of the barium-compound fine particles 13 extremely effectively. Furthermore, because of the setting in which the ceria fine particles 11, which supported the platinum fine particles 20 thereon, and the barium-compound fine particles 13 were mixed in a highly dispersed manner at an extremely small fine-particulate level, it is believed that the barium-compound fine particles 13 suppressed the granular growth of the ceria fine particles 11 extremely effectively, and it is believed accordingly that the granular growth of the platinum fine particles 20 was suppressed effectively by means of the setting.
Moreover, because of the setting in which the very fine ceria fine particles 11 whose primary particle diameter was 2.1 nm that was 5 nm or less, and the very fine alumina fine particles 12 whose primary particle diameter was about 10 nm were mixed in a highly dispersed manner, it is believed that the alumina fine particles 12 and ceria fine particles 11 became reaction barriers to each other so that the granular growth of each of them was suppressed effectively.

Likewise, in the exhaust-gas converting catalyst that is directed to Example No. 2, the barium-compound fine particles 13, the ceria fine particles 11, and the platinum fine particles 20 had hardly undergone granular growth even after the thermal endurance testing.

On the contrary, in the exhaust-gas converting catalyst according to Comparative Example No. 1 in which the ceria particles 110 and barium-compound particles 130 were supported after supporting the platinum fine particles 200 onto the alumina particles 120, the platinum fine particles 200 underwent granular growth greatly as also shown in the conceptual diagram of Fig. 2. As major reasons for resulting in such a consequence, the following are named: the primary particle diameters of the ceria particles 110 and barium-compound particles 130 were great as much as 5.4 nm and 22.2 nm, respectively; and the platinum fine particles 200 were supported on the alumina particles 120.

Moreover, in the exhaust-gas converting catalyst according to Comparative Example No. 2 in which the barium-compound particles 130 were supported after supporting the platinum fine particles 200 onto a mixture powder that comprised the alumina particles 120 and ceria particles 110, the platinum fine particles 200 underwent granular growth greatly as also shown in the conceptual diagram of Fig. 3. As major reasons for resulting in such a consequence, the following are named: the primary particle diameters of the ceria particles 120 and barium-compound particles 130 were great as much as 9.4 nm and 22.0 nm, respectively; besides, the ceria particles 120, and the barium-compound particles 130 formed the ceria-particle aggregates 150, and the barium-compound-particle aggregates 140, respectively; and the platinum fine particles 200 were supported on the alumina particles 120.

### (Particle Diameter Measurement)

Regarding the respective test specimens after the thermal endurance testing, the platinum particle diameters, barium-compound particle diameters and ceria particle diameters were measured. The measurements of the platinum particle diameters were carried out by means of a CO pulse adsorption method at 0 °C. Moreover, the measurements of the barium-compound particle diameters and ceria particle diameters were carried out by means of X-ray diffraction analysis (XRD).

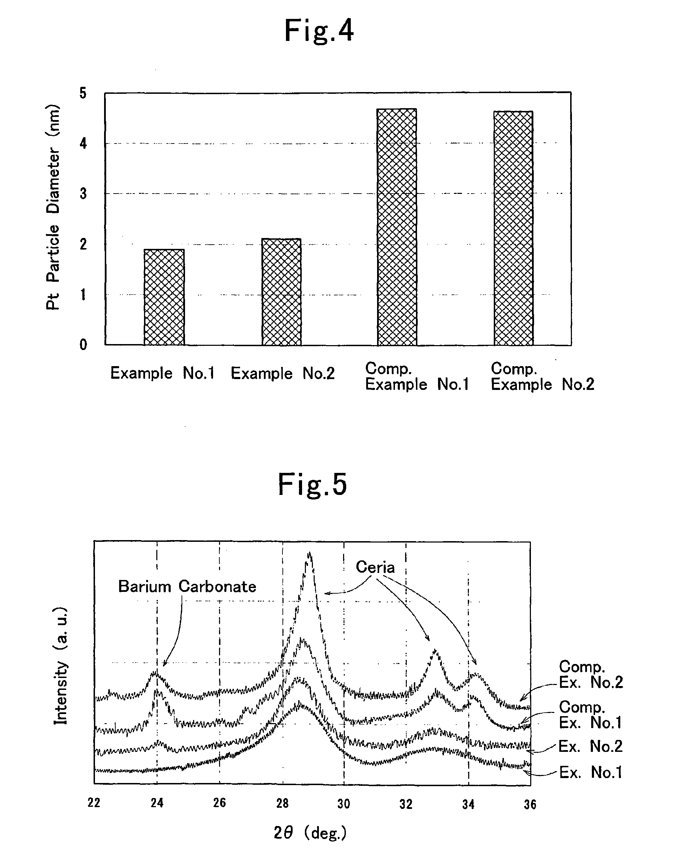

As the measurement results of the platinum particle diameters are shown in Table 1 and Fig. 4, the average particle diameter of the platinum fine particles 200 was 4.7 nm in the exhaust-gas converting catalysts according to Comparative Example No. 1 and Comparative Example No. 2 after the thermal endurance testing. On the contrary, the average particle diameter of the platinum fine particles 20 was 1.9 nm in the exhaust-gas converting catalyst according to Example No. 1 after the thermal endurance testing. Moreover, the average particle diameter of the platinum fine particles 20 was 2.1 nm in the exhaust-gas converting catalyst according to Example No. 2 after the thermal endurance testing.

Moreover, as the measurement results of the barium-compound particle diameters are shown in Table 1, the average primary particle diameter of the barium-compound particles 130 was 35.1 nm in the exhaust-gas converting catalyst according to Comparative Example No. 1 after the thermal endurance testing, and the average primary particle diameter of the barium-compound particles 130 was 23.5 nm in the exhaust-gas converting catalyst according to Comparative Example No. 2 after the thermal endurance testing. On the contrary, in the exhaust-gas converting catalyst that is directed to Example No. 1, no barium-compound fine particles 13 appeared as their diffraction lines after the thermal endurance testing in the X-ray diffraction analysis (XRD) whose measurement limit was 2 nm, and accordingly the average primary particle diameter of the barium-compound fine particles 13 was less than 2 nm. This is believed to result from the fact that the ceria fine particles 11 suppressed the granular growth of the barium-compound fine particles 13 effectively, because the barium-compound fine particles 13 whose primary particle diameters were less than 2 nm and the ceria fine particles 11 whose primary particle diameters were 2.1 nm or less were mixed very finely and were then turned into being highly dispersed in the exhaust-gas converting catalyst that is directed to Example No. 1. Moreover, in the exhaust-gas converting catalyst that is directed to Example No. 2, the average primary particle diameter of the barium-compound fine particles 13 was 10. 3 nm after the thermal endurance testing.

As the measurement results of the ceria particle diameters are shown in Table 1, the average primary particle diameter of the ceria particles 110 was 7.8 nm in the exhaust-gas converting catalysts according to Comparative Example No. 1 after the thermal endurance testing, and the average primary particle diameter of the ceria particles 110 was 20.1 nm in the exhaust-gas converting catalysts according to Comparative Example No. 2 after the thermal endurance testing. On the contrary, the average primary particle diameter of the ceria fine particles 11 was 3. 6 nm in the exhaust-gas converting catalyst according to Example No. 1 after the thermal endurance testing. Moreover, the average primary particle diameter of the ceria fine particles 11 was 5.2 nm in the exhaust-gas converting catalyst according to Example No. 2 after the thermal endurance testing.

### (Qualitative Analysis by means of XRD)

Moreover, regarding the respective test specimens after the thermal endurance testing, a qualitative analysis was carried out by means of X-ray diffraction analysis (XRD).

As those results are shown in Fig. 5, no diffraction line of barium carbonate was seen; moreover, the ceria particles 11 were also pulverized very finely to exist in the exhaust-gas converting catalyst according to Example No. 1. In addition, in the exhaust-gas converting catalyst according to Example No. 2 as well, no diffraction line of barium carbonate was hardly seen; moreover, the ceria particles 11 were also pulverized very finely to exist therein.

On the contrary, the presence of particles of barium carbonate and ceria was appreciated; besides that, the particle diameters of these particles were greater ones in the exhaust-gas converting catalysts according to Comparative Example No. 1 and Comparative Example No. 2.

Note that it is indicated that the broader the peaks being seen in the X-ray diffraction analysis of Fig. 5 are the finer the particles are.

### (Specific Surface Area)

In addition, regarding the respective test specimens after the thermal endurance testing, the specific surface area of the catalysts was found using a BET adsorption method.

As those results are shown in Table 1, the catalysts' specific surface area was about 135 m²/g in the exhaust-gas converting catalysts according to Comparative Example No. 1 and Comparative Example No. 2 after the thermal endurance testing. On the contrary, in the exhaust-gas converting catalyst that is directed to Example No. 1, the catalyst' s specific surface area was 211.3 m²/g after the thermal endurance testing. Moreover, the catalyst's specific surface area was 201 . 4 m²/g in the exhaust-gas converting catalyst that is directed to Example No. 2 after the thermal endurance testing.

**(TABLE 1)**

| | Example No. 1 | Example No. 2 | Comp. Example No. 1 | Comp. Example No. 2 |
|---|---|---|---|---|
| Initial Pt Particle Diameter (nm) | 1.6 | 1.7 | 3.0 | 4.2 |
| After-thermal-endurance-testing Pt Particle Diameter (nm) | 1.9 | 2.1 | 4.7 | 4.7 |
| Initial Ba-compound Particle Diameter (nm) | < 2.0 | 9.5 | 22.2 | 22.0 |
| After-thermal-endurance-testing Ba-compound Particle Diameter (nm) | < 2.0 | 10.3 | 35.1 | 23.5 |
| Initial Ceria Particle Diameter (nm) | 2.1 | 4.7 | 5.4 | 9.4 |
| After-thermal-endurance-testing Ceria Particle Diameter (nm) | 3.6 | 5.2 | 7.8 | 20.1 |
| Initial Specific Surface Area (m²/g) | 235.1 | 219.5 | 155.6 | 140.8 |
| After-thermal-endurance-testing Specific Surface Area (m²/g) | 211.3 | 201.4 | 135.3 | 135.2 |

### (Another Example)

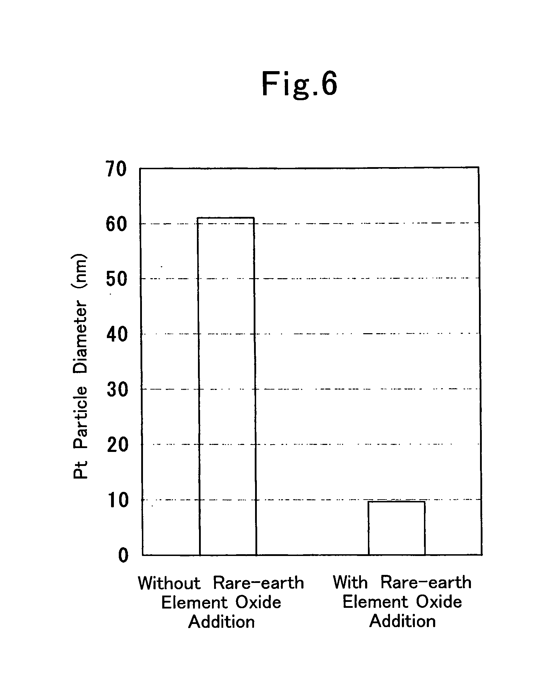

Fig. 6 is one which illustrates after-thermal-endurance-testing platinum particle diameters in the following cases: the same thermal durability test as described above was performed onto an exhaust-gas converting catalyst (initial platinum particle diameter: 4.5 nm) with no rare-earth-element-oxide fine particles being added, exhaust-gas converting catalyst which was made ready by impregnating a commercially available alumina powder with 1-gram dinitro diamine platinum nitrate aqueous solution by conversion into platinum; and to an exhaust-gas converting catalyst (initial platinum particle diameter: 3.0 nm) in which primary particles of lanthanum-oxide fine particles (average primary particle diameter: 4.9 nm) serving as rare-earth-element-oxide fine particles were added. Note that the lanthanum-oxide fine particles serving as rare-earth-element-oxide fine particles were added to an alumina sol by means of supporting them on it by means of a precipitation method.

As can be seen from Fig. 6, it is possible to keep down the granular growth of platinum by means of adding the lanthanum-oxide fine particles that serve as rare-earth-element-oxide fine particles.

Moreover, it is believed that said lanthanum oxide, which was added herein to serve as a rare-earth element oxide, can keep down the granular growth of barium-compound fine particles effectively by means of the interaction between lanthanum oxide and barium in the same manner as ceria does.

Consequently, even in a case where an oxide of lanthanum is employed instead of ceria as a rare-earth element oxide in the catalytic support and exhaust-gas converting catalyst that are directed to above-described Example No. 1 or 2, it is believed to be possible to expect an effect, which can be approximated to the effect in the case of employing ceria, as an effect of keeping down the granular growth of platinum fine particles and the granular growth of barium-compound fine particles.

## Claims

1. A catalytic support being **characterized in that**:
it is made of rare-earth-element-oxide fine particles comprising primary particles of a rare-earth element oxide, alumina fine particles comprising primary particles of alumna, and barium-compound fine particles comprising primary particles of a barium compound, rare-earth-element-oxide fine particles, alumina fine particles and barium-compound fine particles which are mixed with each other;
a primary particle diameter of said rare-earth-element-oxide fine particles is 5 nm or less; and
a primary particle diameter of said barium-compound fine particles is 10 nm or less.

2. The catalytic support as set forth in claim 1 being **characterized in that** the primary particle diameter of said barium-compound fine particles is 5 nm or less.

3. The catalytic support as set forth in claim 1 being **characterized in that** the primary particle diameter of said barium-compound fine particles is less than 2 nm.

4. The catalytic support as set forth in either one of claims 1-3 being **characterized in that** said rare-earth element oxide is ceria.

5. The catalytic support as set forth in either one of claims 1-4 being **characterized in that** the primary particle diameter of said rare-earth-element-oxide fine particles is 3 nm or less.

6. An exhaust-gas converting catalyst being **characterized in that** it is equipped with: the catalytic support as set forth in either one of claims 1-5; and platinum fine particles being supported on the catalytic support.

7. The exhaust-gas converting catalyst as set forth in claim 6 being **characterized in that** saidplatinum fine particles are supported, of said catalytic support, on said rare-earth-element-oxide fine particles virtually.

8. The exhaust-gas converting catalyst as set forth in claim 7 being **characterized in that** 70% by mass or more of the platinum fine particles are supported on said rare-earth-element-oxide fine particles when the entirety of said platinum fine particles is taken as 100% by mass.

9. The exhaust-gas converting catalyst as set forth in claim 7 being **characterized in that** 80% by mass or more of the platinum fine particles are supported on said rare-earth-element-oxide fine particles when the entirety of said platinum fine particles is taken as 100% by mass.
